# EUROPEAN PATENT SPECIFICATION

(11) **EP 2 689 942 B1**
(45) Date of publication and mention of the grant of the patent: **13.03.2019**
(21) Application number: 13176804.6
(22) Date of filing: 17.07.2013
(51) Int. Cl.: B60G 7/00, B60G 21/05

(54) **Suspension arm for motor vehicle and process for its manufacture**
Lenkerbauteil für Radaufhängungen von Kraftfahrzeugen und Verfahren zu seiner Herstellung
Bras de suspension pour véhicule automobile et procédé pour sa fabrication

(30) Priority: 23.07.2012 IT TO20120645
(43) Date of publication of application: 29.01.2014
(73) Proprietor: Proma S.p.A., 81020 S. Nicola La Strada (CE) (IT)
(72) Inventor: Pino, Nicola Giorgio, 81100 Caserta (IT)
(74) Representative: Vitillo, Giuseppe

(56) References cited:
- FR-A1- 2 819 754
- FR-A1- 2 839 014
- JP-A- 2000 335 219
- JP-A- 2010 247 757

## Description

### Technical field

The present invention relates to an arm, in particular for a rear suspension of a motor vehicle, and to a method for manufacturing the same.

### Background art

In the field of suspension, it is known to use an assembly of members to connect the frame of the motor vehicle to the wheels.

In particular, one of the most used configurations for rear suspensions is the twist-beam axle type, wherein the supporting structure is articulated to the frame of the motor vehicle, and is generally formed by a cross member and a pair of trailing arms connected on transversally opposite sides of the cross member.

The arms are typically manufactured by assembling a plurality of distinct components, e.g. welded or seamed together, each of them being adapted to perform different functions; for example:
- a first component may be used for supporting and/or guiding elastic means adapted to connect the supporting structure to the bearing structure of the motor vehicle,
- a second component may be used for connecting to shock absorber means adapted to damp the oscillation of the arm with respect to said bearing structure,
- a third component may be used for connecting to a wheel-carrying structure adapted to support an associated rear wheel;
- a fourth component may be used for connecting to articulated means adapted to provide an articulated connection to the bearing structure of the vehicle; and
- a fifth component may be used for connecting to a cross member of the rear suspension.

FR 2 839 014 A1 discloses a back axle with deformable crosspiece that comprises two opposite longitudinal suspension arms to which two wheel supports are fixed. The crosspiece extends in a transverse direction and has two opposite ends fixed to the suspension arms. The suspension arms and the crosspiece constitute a single part formed from two half-shells. Such documents also discloses a method of manufacturing the back axle.

FR 2 819 754 A1 discloses an axle comprising pivoting lateral arms supporting the wheels, a transverse link between the two lateral arms and a spring retainer associated with each arm for receiving the low end of a suspension spring, wherein each of said pivoting arms and said spring retainer associated therewith are produced in a single-piece assembly by hydroforming of an initial tubular part.

### Brief description of the invention

One object of the present invention is to provide an arm for a rear suspension of a motor vehicle which can be manufactured in a simple and economical manner, in particular with reduced costs and complexity of the overall manufacturing process, through a reduction of the number of components to be subjected to separate machining processes and to be then assembled together, and which can ensure high performance levels and a considerable operating life.

More in detail, the reduction of the number of components that contribute to forming the arm's supporting structure leads to the advantage that the number of machining processes to be carried out on separate components is reduced accordingly, resulting in shorter production times and lower production costs.

Furthermore, said reduction of the number of components involves an associated reduction of the number of assembling and fastening operations, e.g. because of less connection areas between separate components to be connected together, in particular by welding or seaming.

According to the present invention, this and other objects are achieved through an arm and a process as set out in respective independent claims.

It is understood that the appended claims are an integral part of the technical teachings provided in the following detailed description of the present invention.

### Brief description of the drawings

Further features and advantages of the present invention will become apparent from the following detailed description, which is supplied by way of non-limiting example with reference to the annexed drawings, wherein:
- Figure 1 is a perspective view of a suspension incorporating a pair of arms, each of which is manufactured in accordance with one exemplary embodiment of the present invention;
- Figure 2 is a perspective view of one of the arms shown in Figure 1;

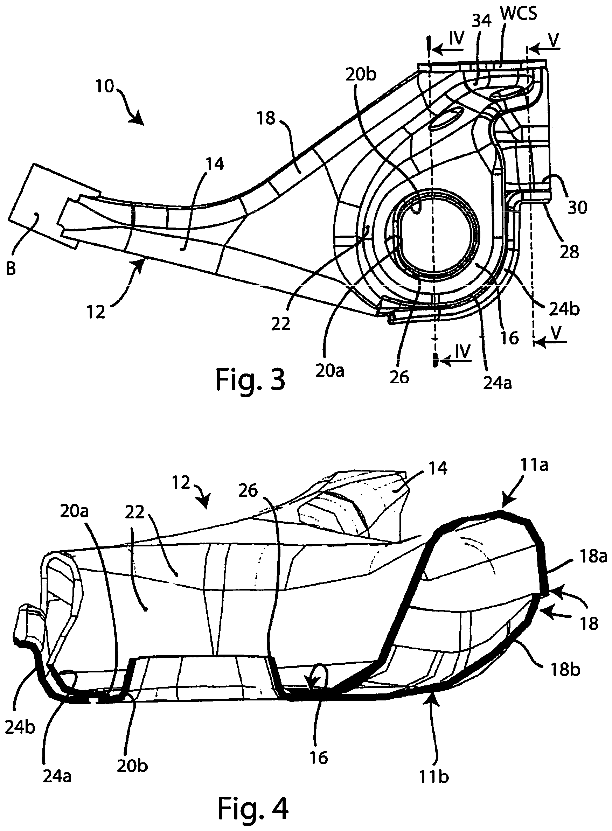

- Figure 3 is a top view of the arm shown in Figure 2;
- Figure 4 and 5 are cross-sectional views of the arm shown in the preceding figures, respectively obtained through the lines IV-IV and V-V indicated in Figure 3; and
- Figures 6 to 15 are views representing a sequence of some of the operating steps of a process for manufacturing an arm in accordance with one exemplary embodiment of the present invention.

### Detailed description of the invention

In the following description and in the appended claims, terms such as "longitudinal" "transversal", "internal", "external", "front", "rear", "horizontal" "vertical", "upper", "lower", "high" and "low", as well as expressions derived therefrom, will refer to the arm when mounted to a suspension of the motor vehicle.

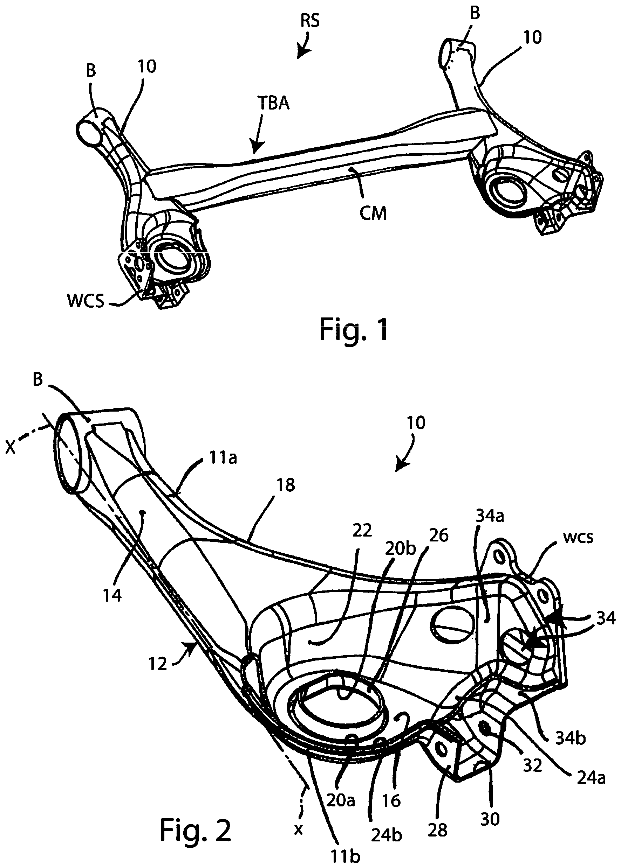

With particular reference to Figure 1, RS designates as a whole a rear suspension for a motor vehicle.

Rear suspension RS comprises:
- a twist-beam axle TBA adapted to be mounted in an articulated manner at the front of the bearing structure of the motor vehicle (not shown), preferably through respective articulated means, e.g. respective bushes B,
- elastic means and shock absorber means (details not shown) mounted at the rear between twisted-beam axle TBA and the bearing structure of the motor vehicle,
- a pair of wheel-carrying structures WCS, mounted on transversally opposite sides of twisted-beam axle TBA, each of them being adapted to support a respective rear wheel (not shown).

Still with reference to the example shown in Figure 1, the twisted-beam axle comprises a cross member CM and a pair of trailing arms 10 connected on transversally opposite sides of cross member CM, at least one of which is made in accordance with an exemplary embodiment of the present invention. Advantageously, both arms 10 are made in accordance with the present invention, and are symmetrical to each other with respect to a longitudinal axis corresponding to an general axis of symmetry of suspension RS.

As will be apparent to a man skilled in the art reading this description, the present invention should not be considered to be limited to suspension structures of the twist-beam axle type. In fact, the arm according to the present invention is also suitable for use in different suspension structures, e.g. as a trailing arm of an independent-arm suspension. Said arm may possibly also be used for vehicular front suspensions.

With particular reference to Figure 2, there is shown a perspective view of arm 10 obtained in accordance with the embodiment of the present invention illustrated herein.

Arm 10 is made in a single piece from a metal sheet 11 having a pair of borders 11a, 11b, which are shaped and bent one over the other along a bending axis or line X-X, preferably following a substantially longitudinal direction (e.g. in a transversally internal position), to define as a whole a single supporting structure 12.

Thanks to such characteristics, the number of components to be assembled together in order to manufacture the arm is considerably reduced, leading to a reduction of the total number of steps required for mounting and assembling the suspension in which said arm will have to be incorporated.

In the illustrated embodiment, supporting structure 12 is adapted to support and guide elastic means (not shown), which are adapted to connect supporting structure 12 to the bearing structure of the motor vehicle, and is adapted to connect to shock absorber means (not shown), which shock absorber means are adapted to damp the oscillation of arm 10 with respect to the bearing structure of the motor vehicle.

In the illustrated embodiment, said supporting structure 12 is also preferably adapted to connect to a wheel-carrying structure WCS, which is adapted to support an associated rear wheel, to connect in an articulated manner to the bearing structure of the motor vehicle, and to connect to a cross member CM of rear suspension RS.

In the illustrated embodiment, supporting structure 12 comprises a hollow bearing portion 14 defined by overlapping borders 11a, 11b of metal sheet 11 and having a closed boxed section. In particular, hollow bearing portion 14 is adapted to be connected at the front to articulated means, e.g. a bush B, adapted to provide an articulated connection between arm 10 and the bearing structure of the motor vehicle.

Preferably, hollow bearing portion 14 is adapted to be connected, e.g. at a longitudinally intermediate portion thereof, to cross member CM in an internal transversal direction.

Advantageously, hollow bearing portion 14 includes a joining region 18, preferably situated in a transversal position, wherein the transversal ends of borders 11a, 11b are preferably firmly secured to each other, e.g. by welding or seaming. Preferably, joining region 18 is on the side transversally opposite to bending axis X-X; more in detail, in the illustrated embodiment joining region 18 is situated on the transversally external side.

In the illustrated embodiment, joining region 18 is advantageously defined by sunken parts 18a and 18b situated at the transversal end of borders 11a and 11bm in particular defining cavities facing towards each other. Particularly, sunken parts 18a and 18b are secured one over the other to transversally close the section defined by bearing portion 14.

In the illustrated embodiment, supporting structure 12 comprises a preferably substantially flat abutment portion 16, defined by overlapping borders 11a, 11b of the metal sheet, which is adjacent to bearing portion 14 and is adapted to receive in abutment the elastic means, e.g. a coil spring. In particular, abutment portion 16 is advantageously recessed downwards with respect to bearing portion 14. In this preferred configuration, borders 11a and 11b are in contact with each other at the abutment portion, thus creating a substantially plate-like region in supporting structure 12.

Preferably, the bearing portion 16 has an annular surface adapted to act as a seat for housing and guiding the end of the spring. In the illustrated embodiment, abutment portion 16 is obtained around a pair of superimposed apertures 20a and 20b, respectively obtained on borders 11a and 11b.

Advantageously, said abutment portion 16 is surrounded in front by an intermediate part 22 of upper border 11a, which is bent downwards with respect to hollow bearing portion 14. This creates a front delimitation surface for countering any possible forward movements of the suspension spring when the latter is housed in abutment portion 16.

Advantageously, said abutment portion is surrounded at the back by a pair of rear edges 24a and 24b, overlapping each other and bent upwards, of upper and lower borders 11a and 11b. This creates a rear delimitation surface for countering any possible backward movements of the suspension spring when the latter is housed in abutment portion 16.

In the illustrated embodiment, supporting portion 16 surrounds a collar 26 obtained peripherally on lower aperture 20b and protruding upwards through upper aperture 20a. This creates an internal delimitation surface for countering any movements of the suspension spring when the latter is housed in abutment portion 16.

Preferably, supporting structure 12 comprises a connecting portion 28 defined by lower border 11b of metal sheet 11 and having an upwardly open cross-section, which is adjacent to abutment portion 16 and is adapted to be connected to shock absorber means of the suspension, which shock absorber means are adapted to damp the oscillation of arm 10 with respect to the bearing structure of the motor vehicle. In particular, connecting portion 28 extends rearwards past abutment portion 16, e.g. past upper rear edge 24a.

In the illustrated embodiment, connecting portion 28 has a U-shaped channel, in the vertical sides of which there are preferably holes 32 adapted to allow connecting the shock absorber means.

Preferably, the bearing portion also has a bearing lug 34 defined by borders 11a, 11b of metal sheet 11, which is located and open in an external transversal position. Bearing lug 34 is adapted to be connected to a wheel-carrying structure WCS adapted to support an associated rear wheel.

Particularly, bearing lug 34 is defined at the top by a bent edge 34a of upper border 11a, arched upwards relative to lower border 11b.

In particular, bearing lug 34 is defined at the bottom by a substantially flat edge 34b of lower border 11b, surmounted by upper border 11a.

In the illustrated embodiment, bearing lug 34 is defined between said bent edge 34a and said substantially flat edge 34b.

Furthermore, in the example illustrated in the drawings bearing lug 34 is located at the rear in correspondence to joining region 18; in particular, bent edge 34a and/or substantially flat edge 34b are located at the rear in correspondence to the external transversal end of joining region 28. Preferably, the bent edge 34a and/or substantially flat edge 34b are formed at the rear on sunken parts 18a and 18b.

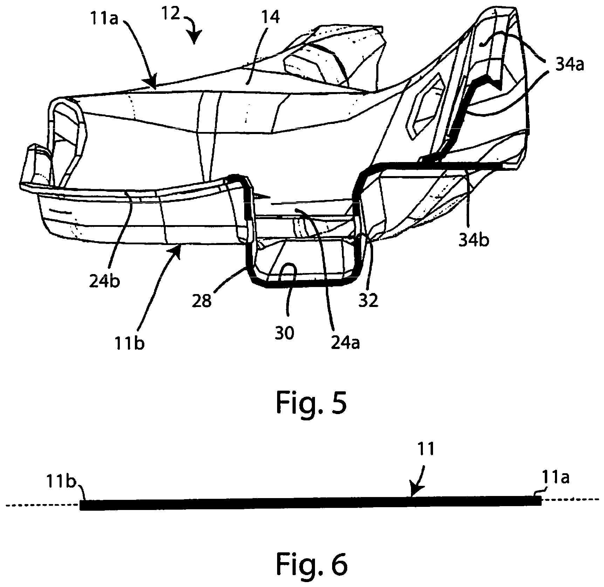

With reference to Figures 6 to 15, the following will describe an embodiment of a process for manufacturing the arm shown in the preceding Figures.

Said process is aimed at manufacturing an arm 10 for a rear suspension RS of a motor vehicle, and comprises the following steps:
- preparing a metal sheet 11;
- shaping said metal sheet 11;
- bending a pair of borders 11a, 11b of metal sheet 11 one over the other along a bending axis X-X, thereby forming as one piece a single supporting structure 12.

Preferably, the shaping of metal sheet 11 takes place by means of one or more cold pressing steps (i.e. forming achieved by using a pressing machine) on borders 11a and 11b, which will contribute to creating the desired shape of the two "half-shells" that will have to be bent one over the other in order to define the whole monolithic supporting structure 12.

Advantageously but not necessarily, the shaping of the metal sheet requires no "hot" steps nor any steps involving heating sheet 11 or portions thereof to obtain supporting structure 12 of arm 10.

In Figure 6, metal sheet 11 is shown during the initial step of the embodiment illustrated herein of the process according to the present invention.

In the illustrated embodiment, a single metal sheet 11, which is substantially flat, thin and substantially rectangular in shape, is first prepared. The left part of metal sheet 11, designated 11a, corresponds to what will be referred to as lower border 11b at the end of the process.

Advantageously, metal sheet 11 is preferably made of steel, e.g. high tensile steel (particularly Fe590FB, S500, S800 or the like).

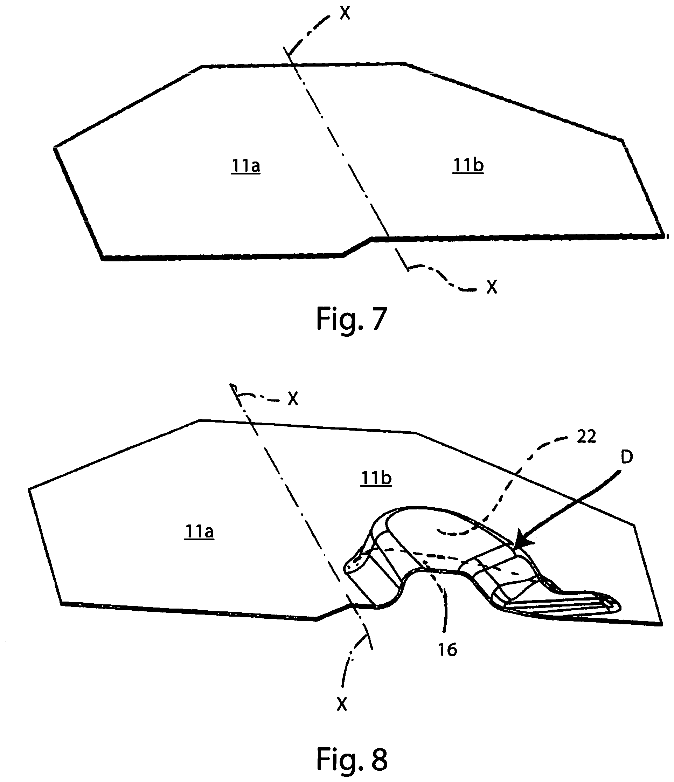

In Figure 7, metal sheet 11 is shown after having been subjected to an optional shearing step aimed at forming on said metal sheet 11 a predetermined contour suitable for the shaping and bending operations that will take place in the next steps. In the illustrated embodiment, said shearing step creates on said metal sheet 11 a contour defined by a closed broken line. Merely by way of example, also this figure (and the following drawings) shows the portions of metal sheet 11a and 11b that will become, respectively, the upper border and the lower border.

In Figure 8, metal sheet 11 is shown after a step of the shaping operation, preferably carried out by pressing, in particular by cold pressing.

During said step of the shaping operation, upper border 11a is deformed in order to create a dome D. Observing Figure 8, dome D projects upwards, with its concavity facing downwards, and includes:
- a base wall or inner face adapted to form abutment portion 16, and
- an inner side wall, in its turn adapted to form intermediate part 22.

In the illustrated embodiment, a section of the side wall of dome D is open outwards.

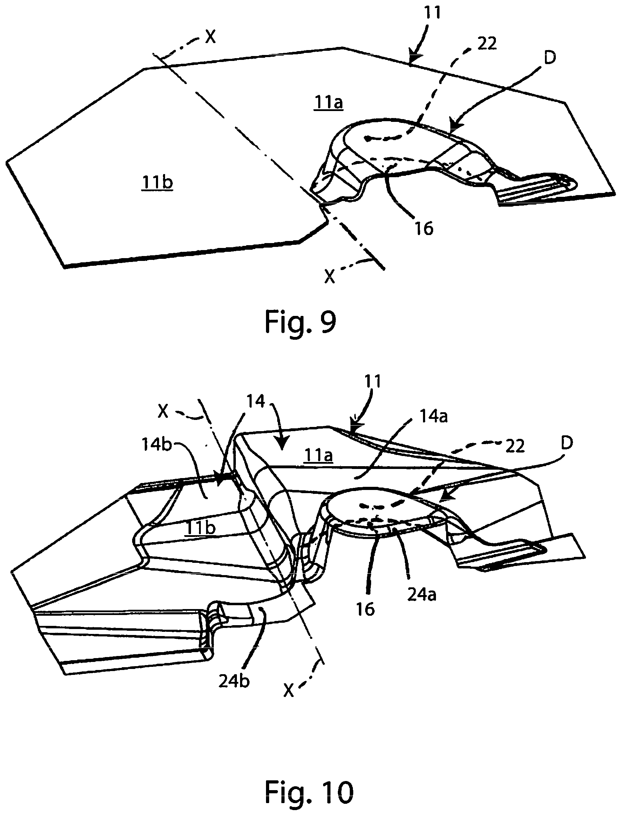

In Figure 9, metal sheet 11 is shown after a further step of the shaping operation, preferably carried out by pressing, in particular cold pressing, and a preferable shearing step.

During these steps, said dome D is completed on the upper border 11a.

In Figure 10, the metal sheet is shown after a further step of the shaping operation, preferably carried out by pressing, in particular cold pressing.

During this further step of the shaping operation, the whole metal sheet 11 is deformed in a manner such as to create sunken portions with the cavity facing downwards as viewed in Figure 10. Said sunken portions, designated 14a and 14b, form "half-shells" respectively obtained on borders 11a and 11b. In the illustrated embodiment, sunken portions 14a and 14b must be bent and abutted against each other to define - at the end of the process - bearing portion 14 having a closed, substantially boxed, section.

In addition, during said further step of the shaping operation, "drafts" of what at the end of the process will be the upper bent edge 24a and lower bent edge 24b are formed on the upper border 11a and on lower border 11b. When viewing Figure 10, the upper bent edge 24a is made by bending (or arching) downwards a section of the base wall of dome D (the one situated in correspondence to the externally open section of its side wall), whereas lower bent edge 24b is made, at this stage, as a substantially flat portion adjacent to sunken portion 14b.

As can be noticed, the forming of dome D on upper border 11a preferably occurs prior to making sunken portion 14a (and possibly other sunken portion 14b). However, in further variant embodiments it is conceivable to invert these two steps, i.e. to make sunken portion 14a (and possibly other sunken portion 14b) prior to forming dome D. In further variants, it is conceivable to carry out a single step for simultaneously making sunken portion 14a and dome D.

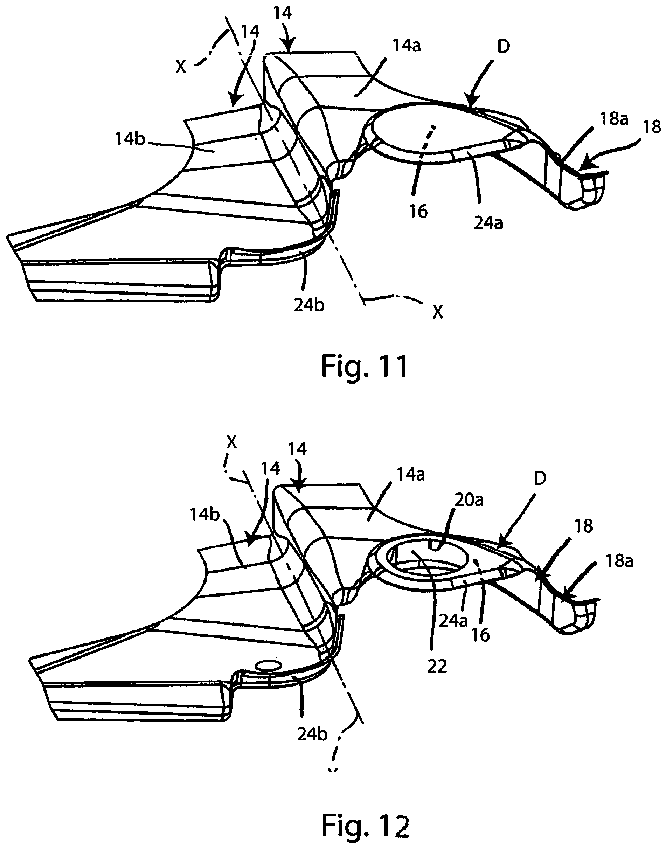

In Figure 11, metal sheet 11 is shown after an further step of the shaping operation, which in the illustrated embodiment is carried out by trimming.

During this further step of the shaping operation, some perimetric portions of borders 11a, 11b are defined and trimmed to define joining region 18. In the illustrated embodiment, this shaping operation defines, in particular, sunken part 18a situated at the transversal end of upper border 11a.

In addition, during said further step of the shaping operation lower bent edge 24b is curved upwards.

In Figure 12, metal sheet 11 is shown after a further step of the shaping operation, which in the illustrated embodiment is carried out by punching.

This step of the shaping operation defines what - at the end of the process - will be upper aperture 20a situated in correspondence to abutment portion 16.

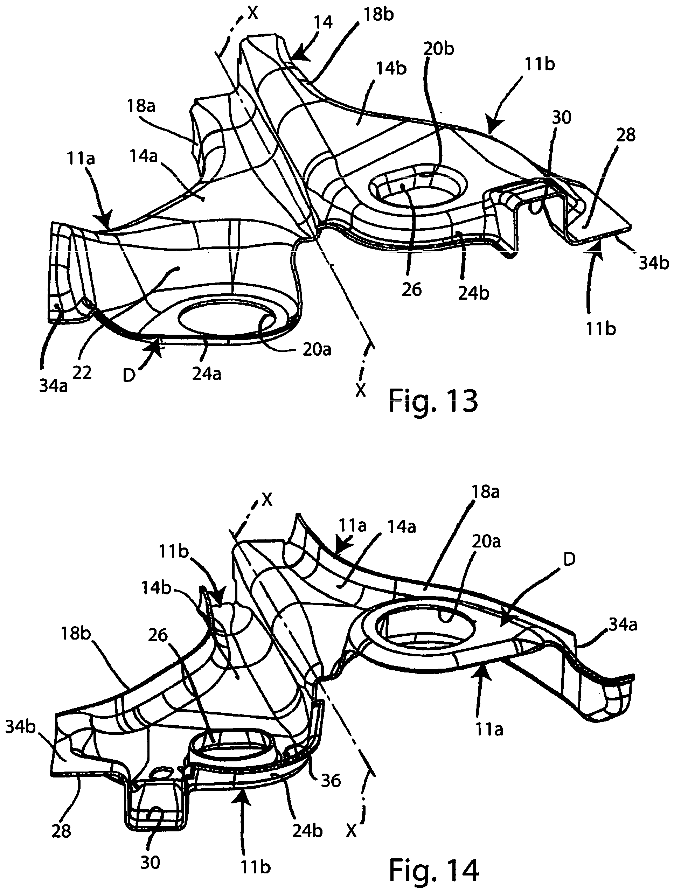

In Figure 13 the metal sheet is shown turned by 180° around bending line X-X compared to the preceding figures, after a further step of the shaping operation preferably including a punching and/or edge-making step.

Said punching and/or edge-making step is carried out on border 11b and allows creating what - at the end of the process - will be lower aperture 20b, preferably with edged collar 26 facing downwards as viewed in Figure 13.

Preferably, said further step of the shaping operation also includes a flanging operation that allows forming connecting portion 28 at the rear of lower border 11b.

In the illustrated embodiment, the flanging allows obtaining, transversally on the external part of lower border 11b, sunken part 18b, which is adapted to form joining portion 18.

More preferably, the flanging also allows forming lug 34, particularly by creating bent edge 34a and the respective substantially flat edge 34b.

In Figure 14, the metal sheet is shown again in the orientation previously represented in Figures 9 to 12 (i.e. turned again by 180°) after a further step of the shaping operation, which in the illustrated embodiment comprises a punching step.

Said punching step creates semicircular holes 36 around collar 26. Preferably, said holes 36 are adapted to allow depositing weld beads between upper border 11a and lower border 11b.

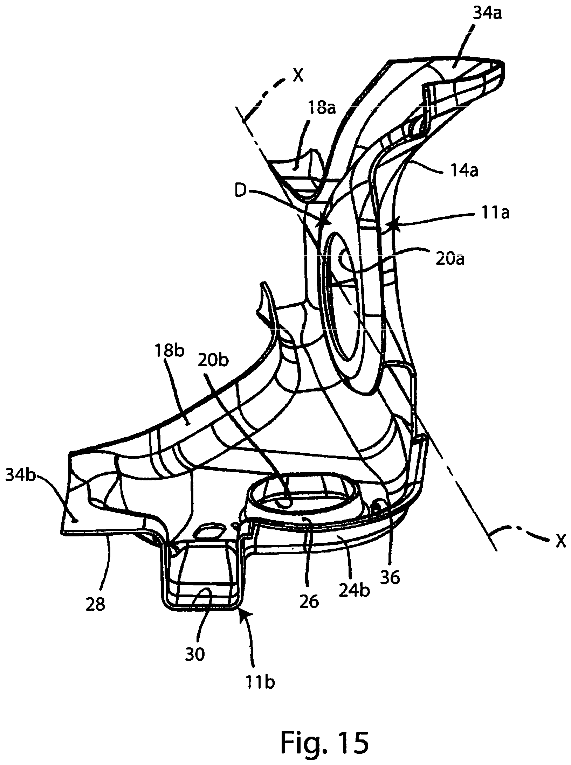

In Figure 15, the metal sheet is show after a step of the bending operation, wherein upper border 11a is shown - for clarity - turned towards the lower border 11b, forming therewith only an angle of approx. 90°. The bending operation ends after a full 180° rotation, i.e. when upper border 11a has been correctly superimposed on and placed in contact with the lower border 11b, which corresponds to the configuration shown in Figure 2. In particular, the underside of upper border 11a is in contact with the top side of lower border 11b.

During said bending operation, upper border 11a is bent along bending axis X-X towards lower border 11b, so as to cause the "half-shells" defined by them to coincide with each other, in particular sunken portions 14a and 14b and preferably the sections defining abutment portion 16. During the bending operation, in particular, while defining abutment portion 16 created by overlapping borders 11a, 11b, alignment is kept between apertures 20a and 20b (together with collar 26).

At the end of said bending operation, a step is carried out to firmly connect borders 11a, 11b at joining region 18 located on the side opposite to bending axis X-X.

In particular, the ends of borders 11a, 11b, which define joining region 18, are firmly secured to each other, e.g. by welding or seaming. In the illustrated embodiment, joining region 18 is conveniently located in a transversally external peripheral position, and therefore said step of connecting borders 11a, 11b is carried out in that position.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Arm (10), in particular for a rear suspension (RS) of a motor vehicle, said arm having a pair of borders (11a, 11b) which are shaped to define as a whole a single supporting structure (12);
wherein said supporting structure (12) comprises a hollow bearing portion (14) defined by said borders (11a, 11b) of said metal sheet (11) and having a closed boxed section for being connected in an articulated manner to the bearing structure of said motor vehicle;
wherein said supporting structure (12) comprises a substantially flat abutment portion (16), which is recessed downwards with respect to said bearing portion (14) and is defined by said borders (11a, 11b) of the metal sheet (11), which abutment portion (16) is located behind said bearing portion (14), and is adapted to receive in abutment said elastic means;
**characterized in that** said arm is being made in a single piece from a single metal sheet (11) wherein said borders (11a, 11b) are overlapping and bent one over the other along a bending axis (X-X);
**in that** said abutment portion (16) has an annular surface for acting as a seat for housing and guiding the end of said elastic means and is obtained around a pair of superimposed apertures (20a, 20b) respectively obtained on said borders (11a, 11b); and
**in that** a collar (26) is obtained around the lower aperture (20b) of the lower border (11b), protruding through the upper aperture (20a) of the upper border (11a).

2. Arm according to claim 1, wherein said supporting structure (12) is adapted to:
- support and guide elastic means for connecting said supporting structure (12) to the bearing structure of said motor vehicle;
- connect to shock absorber means for damping the oscillation of said arm (10) with respect to said bearing structure of said motor vehicle; and preferably to:
- connect to a wheel-carrying structure (WCS) for supporting an associated rear wheel;
- connect to articulated means (B) for providing an articulated connection to said bearing structure of said motor vehicle; and
- connect to a cross member (CM) of said rear suspension (RS).

3. Arm according to any one of claims 1 to 2, wherein said supporting structure (12) comprises a connecting portion (28) defined by the lower border (11b) of the metal sheet (11), which has an open cross-section, located near said abutment portion (16), and which is adapted to be connected to shock absorber means of said suspension (RS), which shock absorber means are for damping the oscillation of said arm (10) with respect to said bearing structure of the motor vehicle.

4. Arm according to claim 3, wherein said connecting portion (28) extends rearwards past said abutment portion (16).

5. Arm according to any one of claims 1 to 4, wherein said bearing portion (14) has a lug (34) which is defined by said borders (11a, 11b) of said metal sheet and is located and open in an external transversal position; said lug (34) being adapted to be connected to a wheel-carrying structure (WCS) for supporting an associated rear wheel.

6. Arm according to claim 5, wherein said lug (34) is defined by at least one of a bent edge (34a) of said upper border (11a), arched upwards relative to said lower border (11b), and a substantially flat edge (34b) of said lower border (11b) surmounted by said upper border (11a).

7. Process for manufacturing an arm (10), in particular for a rear suspension (RS) of a motor vehicle, comprising the following steps:
- preparing a single metal sheet (11);
- shaping said single metal sheet (11);
- bending a pair of borders (11a, 11b) of said single metal sheet (11) one over the other along a bending axis (X-X), thereby forming as one piece a single supporting structure (12) of said arm (10);
wherein the step of shaping said metal sheet (11) comprises a pressing step in which recessed portions (14a, 14b) are created on each one of said borders (11a, 11b), so as to form a closed-section bearing portion (14) when said recessed portions (14a, 14b) are bent one over the other;
wherein the step of shaping said metal sheet (11) comprises a further pressing step in which on said upper border (11a) a dome (D) is created whose base wall is adapted to form the upper face of an abutment portion (16) located behind said bearing portion (14) and recessed downwards with respect to the latter;
wherein the step of shaping said metal sheet (11) further comprises a punching step in which a pair of apertures (20a, 20b) are created on said pair of borders (11a, 11b); said apertures (20a, 20b) being adapted to be placed one over the other, the annular region around said apertures (20a, 20b) defining said abutment portion (16); and
wherein said step of shaping said metal sheet (11) further comprises an edge-making step in which a collar (26) is obtained around the aperture (20b) of said lower border (11b), protruding through the aperture (20a) of said upper border (11a).

8. Process according to claim 7, wherein said step of shaping said metal sheet (11) comprises at least one cold pressing step.

9. Process according to claim 7 or 8, wherein said step of shaping said metal sheet (11) includes neither any hot step nor any step involving heating said metal sheet (11).

10. Process according to any one of claims 7 to 9, wherein said shaping step further comprises a pressing step in which a connecting portion (28) is created on said lower border (11b), which has an open cross-section, located near said abutment portion (16), and which is adapted to be connected to shock absorber means of said suspension (RS), which shock absorber means are for damping the oscillation of said arm (10) with respect to said bearing structure of the motor vehicle.

11. Process according to any one of claims 7 to 10, further comprising, after the step of bending said borders (11a, 11b), a step of firmly connecting said borders (11a, 11b) in a joining region (18) located on the side opposite to said bending axis (X-X).

## Patentansprüche

1. Arm (10), insbesondere für eine Hinterradaufhängung (RS) eines Kraftfahrzeugs,
wobei der Arm ein Paar Kanten (11a, 11b) aufweist, welches so geformt ist, dass es als Ganzes eine einzige Stützstruktur (12) definieren;
wobei die Stützstruktur (12) einen hohlen Lagerabschnitt (14) umfasst, der durch die Kanten (11a, 11b) des Metallblechs (11) definiert ist und einen geschlossenen Kastenabschnitt aufweist, der gelenkig mit der Stützstruktur des Kraftfahrzeugs verbunden ist;
wobei die Stützstruktur (12) einen im Wesentlichen flachen Auflageabschnitt (16) umfasst, der in Bezug auf den Lagerabschnitt (14) nach unten zurückgesetzt ist und durch die Kanten (11a, 11b) des Metallblechs (11) definiert ist, wobei sich der Auflageabschnitt (16) hinter dem Lagerabschnitt (14) befindet und geeignet ist, im in Auflage die elastischen Mittel aufzunehmen;
**dadurch gekennzeichnet, dass** der Arm in einem Stück aus einem einzigen Metallblech (11) hergestellt ist, wobei die Kanten (11a, 11b) sich überlappen und entlang einer Biegeachse (X-X) übereinander gebogen werden;
dass der Auflageabschnitt (16) eine ringförmige Oberfläche aufweist, um als Sitz für die Aufnahme und Führung des Endes der elastischen Mittel zu dienen, und durch ein Paar übereinanderliegender Öffnungen (20a, 20b) herum gebildet wird, die jeweils an den Kanten (11a, 11b) gebildet werden;
und dass ein Kragen (26) um die untere Öffnung (20b) des unteren Randes (11b) herum gebildet wird, der durch die obere Öffnung (20a) des oberen Randes (11a) ragt.

2. Arm nach Anspruch 1, wobei die Stützstruktur (12) angepasst ist an:
- elastische Mittel zum Tragen und Führen der Stützstruktur (12) mit der Lagerstruktur des Kraftfahrzeugs;
- Verbinden mit Stoßdämpfermitteln zum Dämpfen der Auslenkung des Arms (10) in Bezug auf die Stützstruktur des Kraftfahrzeugs; und vorzugsweise mit:
- Verbindung mit einer Radträgerstruktur (WCS) zum Tragen eines zugehörigen Hinterrades;
- Verbinden mit einer Gelenkeinrichtung (B) zum Bereitstellen einer gelenkigen Verbindung mit der Stützstruktur des Kraftfahrzeugs; und
- Verbinden mit einem Querträger (CM) der Hinterradaufhängung (RS).

3. Arm nach einem der Ansprüche 1 bis 2, wobei die Stützstruktur (12) einen Verbindungsabschnitt (28) umfasst, der durch die untere Kante (11b) des Metallblechs (11) definiert ist, das einen offenen Querschnitt aufweist, der sich in der Nähe des Abstützabschnitts (16) befindet und der mit Stoßdämpfermitteln der Aufhängung (RS) verbunden werden kann, wobei die Stoßdämpfermittel zum Dämpfen der Auslenkung des Arms (10) in Bezug auf die Stützstruktur des Kraftfahrzeugs sind.

4. Arm nach Anspruch 3, wobei sich der Verbindungsabschnitt (28) nach hinten über den Auflageabschnitt (16) erstreckt.

5. Arm nach einem der Ansprüche 1 bis 4, wobei der Lagerabschnitt (14) ein Distanzstück (34) aufweist, das durch die Kanten (11a, 11b) des Metallblechs definiert ist und in einer äußeren Querposition angeordnet und geöffnet ist; wobei das Distanzstück (34) geeignet ist, mit einer Radträgerstruktur (WCS) zum Tragen eines zugehörigen Hinterrades verbunden zu werden.

6. Arm nach Anspruch 5, wobei das Distanzstück (34) durch mindestens eine von einer gebogenen Kante (34a) der oberen Kante (11a), die in Bezug auf die untere Kante (11b) nach oben gebogen ist, und einer im Wesentlichen flachen Kante (34b) der unteren Kante (11b), die die obere Kante (11a) überragt, definiert ist.

7. Verfahren zur Herstellung eines Arms (10), insbesondere für eine Hinterradaufhängung (RS) eines Kraftfahrzeugs, umfassend die folgenden Schritte:
- Herstellen eines einzelnen Metallblechs (11);
- Formen des einzelnen Metallblechs (11);
- Biegen eines Paar Kantens (11a, 11b) des einzelnen Metallblechs (11) übereinander entlang einer Biegeachse (X-X), wodurch eine einzelne Stützstruktur (12) des Arms (10) einstückig gebildet wird;
wobei der Schritt des Formens des Metallblechs (11) einen Pressschritt umfasst, in dem vertiefte Abschnitte (14a, 14b) an jeder der Kanten (11a, 11b) gebildet werden, um einen geschlossenen Lagerabschnitt (14) zu bilden, wenn die vertieften Abschnitte (14a, 14b) übereinander gebogen werden;
wobei der Schritt des Formens des Metallblechs (11) einen weiteren Pressschritt umfasst, bei dem an der oberen Kante (11a) eine Kuppel (D) erzeugt wird, dessen Basiswand angepasst ist, um die Oberseite eines Auflageabschnitts (16) zu bilden, welcher in Bezug auf den Lagerabschnitt (14) nach hinten und unten zurückgesetzt ist;
wobei der Schritt des Formens des Metallblechs (11) ferner einen Stanzschritt umfasst, bei dem ein Paar von Öffnungen (20a, 20b) an dem Paar Kanten (11a, 11b) erzeugt werden; wobei die Öffnungen (20a, 20b) so angepasst sind, dass sie übereinander angeordnet werden können, wobei der ringförmige Bereich um die Öffnungen (20a, 20b) den Auflageabschnitt (16) definiert;
und wobei der Schritt des Formens des Metallblechs (11) ferner einen Kantenbildungsschritt umfasst, bei dem ein Kragen (26) um die Öffnung (20b) des unteren Randes (11b) herum gebildet wird, der durch die Öffnung (20a) des oberen Randes (11a) ragt.

8. Verfahren nach Anspruch 7, wobei der Schritt zum Formen des Metallblechs (11) mindestens einen Kaltpressschritt umfasst.

9. Verfahren nach Anspruch 7 oder 8, wobei der Schritt zum Formen des Metallblechs (11) weder einen Warmumformschritt noch einen Schritt zum Erwärmen des Metallblechs (11) beinhaltet.

10. Verfahren nach einem der Ansprüche 7 bis 9, wobei der Formschritt ferner einen Pressschritt umfasst, in dem ein Verbindungsabschnitt (28) an der unteren Kante (11b) gebildet wird, der einen offenen Querschnitt aufweist, der sich in der Nähe des Auflageabschnitts (16) befindet und der mit Stoßdämpfermitteln der Aufhängung (RS) verbunden werden kann, wobei die Stoßdämpfermittel zum Dämpfen der Auslenkung des Arms (10) in Bezug auf die Stützstruktur des Kraftfahrzeugs sind.

11. Verfahren nach einem der Ansprüche 7 bis 10, ferner umfassend nach dem Schritt des Biegens der Kanten (11a, 11b) einen Schritt des festen Verbindens der Kanten (11a, 11b) in einem Fügebereich (18), der sich auf der gegenüberliegenden Seite der Biegeachse (X-X) befindet.

## Revendications

1. Bras (10), en particulier pour une suspension arrière (RS) d'un véhicule motorisé, ledit bras présentant une paire de bordures (11a, 11b) qui est conformée pour définir globalement une seule structure de soutien (12) ;
dans lequel ladite structure de soutien (12) comprend une partie porteuse creuse (14) définie par lesdites bordures (11a, 11b) de ladite tôle métallique (11) et présentant une section encadrée fermée afin d'être raccordée de manière articulée à la structure porteuse dudit véhicule motorisé ;
dans lequel ladite structure de soutien (12) comprend une partie de butée (16) sensiblement plate, qui est en retrait vers le bas par rapport à ladite partie porteuse (14) et est définie par lesdites bordures (11a, 11b) de la tôle métallique (11), laquelle partie de butée (16) est située derrière ladite partie porteuse (14), et est agencée pour recevoir en butée lesdits moyens élastiques ;
**caractérisé en ce que** ledit bras est constitué d'une seule pièce à partir d'une unique tôle métallique (11) dans laquelle lesdites bordures (11a, 11b) se chevauchent et sont recourbées l'une sur l'autre le long d'un axe de courbure (X-X) ;
**en ce que** ladite partie de butée (16) présente une surface annulaire afin d'agir comme un siège pour loger et guider l'extrémité desdits moyens élastiques et est obtenue autour d'une paire d'ouvertures superposées (20a, 20b) obtenues respectivement sur lesdites bordures (11a, 11b) ; et
**en ce qu'**un collet (26) est obtenu autour de l'ouverture inférieure (20b) de la bordure inférieure (11b), en faisant saillie à travers l'ouverture supérieure (20a) de la bordure supérieure (11a).

2. Bras selon la revendication 1, dans lequel ladite structure de soutien (12) est conçue pour :
- supporter et guider des moyens élastiques afin de relier ladite structure de soutien (12) à la structure porteuse dudit véhicule motorisé ;
- relier des moyens amortisseurs de choc pour amortir l'oscillation dudit bras (10) par rapport à ladite structure porteuse dudit véhicule motorisé ; et de préférence pour :
- relier une structure porteuse de roue (WCS) destinée à supporter une roue arrière associée ;
- relier des moyens articulés (B) pour fournir un raccordement par articulation à ladite structure porteuse dudit véhicule motorisé ; et
- relier une entretoise (CM) de ladite suspension arrière (RS).

3. Bras selon l'une quelconque des revendications 1 à 2, dans lequel ladite structure de soutien (12) comprend une partie de raccordement (28) définie par la bordure inférieure (11b) de la tôle métallique (11), qui présente une section transversale ouverte, située à proximité de ladite partie de butée (16), et qui est conçue pour être reliée à des moyens amortisseurs de choc de ladite suspension (RS), lesquels moyens amortisseurs de choc (10) sont prévus pour amortir l'oscillation dudit bras (10) par rapport à ladite structure porteuse du véhicule motorisé.

4. Bras selon la revendication 3, dans lequel ladite partie de raccordement (28) s'étend vers l'arrière au-delà de ladite partie de butée (16).

5. Bras selon l'une quelconque des revendications 1 à 4, dans lequel ladite partie porteuse (14) possède une patte (34) qui est définie par lesdites bordures (11a, 11b) de ladite tôle métallique et est située et ouverte dans une position transversale extérieure ; ladite patte (34) étant agencée pour être reliée à une structure porteuse de roue (WCS) destinée à supporter une roue arrière associée.

6. Bras selon la revendication 5, dans lequel ladite patte (34) est définie par au moins l'un d'un bord recourbé (34a) de ladite bordure supérieure (11a), arquée vers le haut par rapport à ladite bordure inférieure (11b), et d'un bord sensiblement plat (34b) de ladite bordure inférieure (11b) surmontée par ladite bordure supérieure (11a).

7. Procédé de fabrication d'un bras (10), en particulier pour une suspension arrière (RS) d'un véhicule motorisé, comprenant les étapes suivantes :
- préparation d'une tôle métallique unique (11) ;
- mise en forme de ladite tôle métallique unique (11) ;
- courbure d'une paire de bordures (11a, 11b) de ladite tôle métallique unique (11) l'une sur l'autre, le long d'un axe de courbure (X-X), en formant ainsi en une seule pièce une structure de soutien unique (12) dudit bras (10) ;
dans lequel l'étape de mise en forme de ladite tôle métallique (11) comprend une étape d'emboutissage au cours de laquelle des parties en retrait (14a, 14b) sont créées sur chacune desdites bordures (11a, 11b), de façon à former une partie porteuse à section transversale fermée (14) lorsque lesdites parties en retrait (14a, 14b) sont recourbées l'une sur l'autre ;
dans lequel l'étape de mise en forme de ladite tôle métallique (11) comprend une nouvelle étape d'emboutissage, au cours de laquelle, sur ladite bordure supérieure (11a), un dôme (D) est créé, dont la paroi de base est agencée pour former la face supérieure d'une partie de butée (16) située derrière ladite partie porteuse (14) et en retrait vers le bas, par rapport à cette dernière ;
dans lequel l'étape de mise en forme de ladite tôle métallique (11) comprend en outre une étape de matriçage, au cours de laquelle une paire d'ouvertures (20a, 20b) sont créées sur ladite paire de bordures (11a, 11b) ; lesdites ouvertures (20a, 20b) étant agencées pour être placées l'une au-dessus de l'autre, la région annulaire autour desdites ouvertures (10a, 20b) définissant ladite partie de butée (16) ;
et
dans lequel ladite étape de mise en forme de ladite tôle métallique (11) comprend en outre une étape de formation d'un bord, au cours de laquelle un collet est obtenu autour de l'ouverture (20b) de ladite bordure inférieure (11b), en faisant saillie à travers l'ouverture (20a) de ladite bordure supérieure (11a).

8. Procédé selon la revendication 7, dans lequel ladite étape de mise en forme de ladite tôle métallique (11) comprend au moins une étape d'emboutissage à froid.

9. Procédé selon la revendication 7 ou 8, dans laquelle ladite étape de mise en forme de ladite tôle métallique (11) n'inclut aucune étape à chaud ni aucune étape impliquant le chauffage de ladite tôle métallique (11).

10. Procédé selon l'une quelconque des revendications des revendications 7 à 9, dans lequel ladite étape de mise en forme comprend en outre une étape d'emboutissage au cours de laquelle une partie de raccordement (28) est créée sur ladite bordure inférieure (11b), qui présente une section transversale ouverte, située à proximité de ladite partie de butée (16), et qui est agencée pour être reliée aux moyens amortisseurs de choc de ladite suspension (RS), lesquels moyens amortisseurs de choc sont prévus pour amortir l'oscillation dudit bras (10) par rapport à ladite structure porteuse du véhicule motorisé.

11. Procédé selon l'une quelconque des revendications 7 à 10, comprenant en outre, après l'étape de courbure desdites bordures (11a, 11b), une étape consistant à relier solidement lesdites bordures (11a, 11b) dans une région de jointure (18) située sur le côté opposé audit axe de courbure (X-X).
